Europäisches Patentamt

European Patent Office

Office européen des brevets

(11) Publication number: **0 378 727**
**A1**

## EUROPEAN PATENT APPLICATION

(21) Application number: **89100938.3**

(22) Date of filing: **20.01.89**

(51) Int. Cl.5: **G07F 7/00, G07F 7/02**

(43) Date of publication of application:
**25.07.90 Bulletin 90/30**

(84) Designated Contracting States:
**BE CH DE ES FR GB LI**

(71) Applicant: **URMET S.p.A. Costruzioni Elettro-Telefoniche**
**Via Bologna 188/C**
**I-10154 Torino(IT)**

(72) Inventor: **Mondardini, Massimo**
**Via Mazzini 40**
**I-10123 Torino(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Device for converting private-user telephones into telephones enabled by obliterable pre-payment cards.**

(57) A device for converting private-user telephones into pre-payment telephones which can be enabled using obliterable pre-payment cards, comprising in combination a pre-payment card reader (28) controlled by a control microprocessor (μP), a power supply (29) with a buffer source (30), line engagement detection means (31) for activating the control microprocessor, rate pulse detecting means (32) which activate, by means of the microprocessor, corresponding card obliteration elements (36), and time-controlled disconnection means (33) for connecting and disconnecting the telephone line (LT), said disconnection means being sensitive to the presence, in the reader, of a card (24) having preset validity requirements.

**FIG .1**

# DEVICE FOR CONVERTING PRIVATE-USER TELEPHONES INTO TELEPHONES ENABLED BY USING OBLITERABLE PRE-PAYMENT CARDS

The present invention relates to a device for converting private-user telephones into telephones enabled by obliterable pre-payment cards, for example magnetic-strip cards.

Obliterable pre-payment cards, for example of the magnetic-strip type, are known and in widespread use for enabling telephones dedicated exclusively to public use.

Said dedicated telephones are becoming increasingly widespread, but their density is generally much lower than the requirements of current telephone traffic, so that the service is not always satisfactory due to the unavoidable waiting, especially in particularly crowded places such as stations, hotels, restaurants, meeting-places and the like. For these reasons, besides telephones dedicated to public users, private-user telephones are often provided equipped with call-counting meters; said meters, however, are difficult to use, since the rate units must be calculated in order to charge the call, consequently causing a loss of time and possible errors.

The aim of the present invention is to eliminate these disadvantages, and for this purpose it is based on the concept of converting, by means of an add-on device, a normal private-user telephone into a public-use telephone which can be enabled by using pre-payment cards which are partially or totally obliterated by the rate pulses sent by the local exchange over the telephone line.

The present invention therefore relates to a device as defined in appended claim 1.

The characteristics and advantages of the invention will become apparent from the following detailed description to be read with reference to the accompanying drawings, given only by way of non-limitative example, wherein:

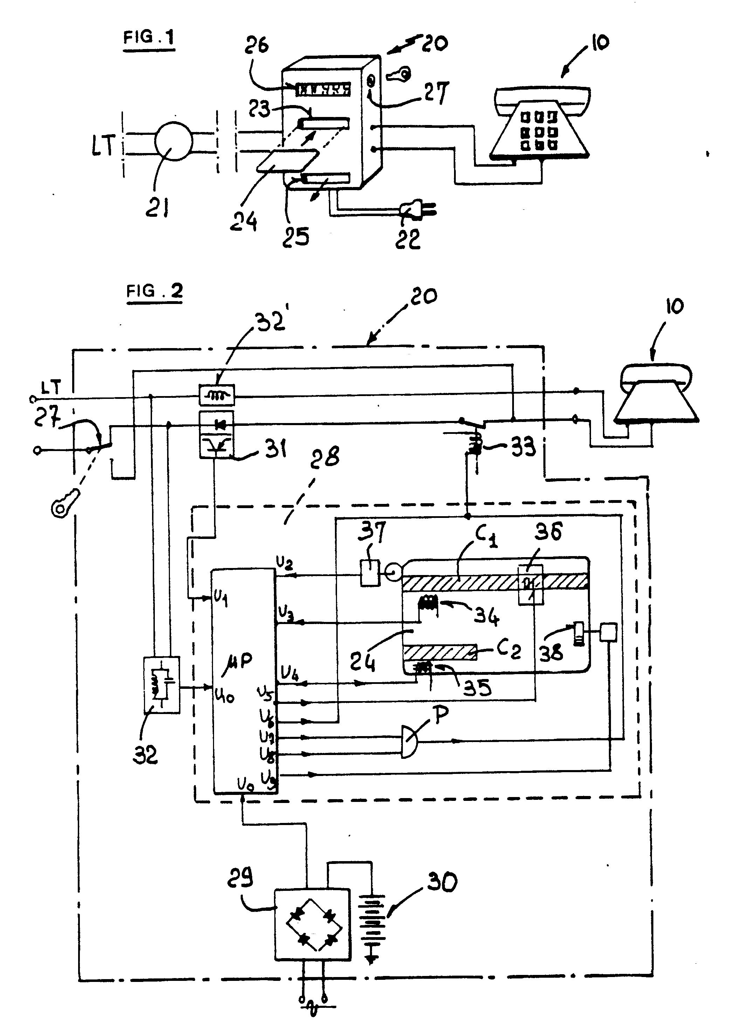

figure 1 is a schematic view illustrating how to insert the device according to the invention between an ordinary desktop telephone and the telephone line,

figure 2 is a detailed electric diagram of the device and of its connections to the telephone line.

In the drawings, 10 indicates a conventional desktop telephone of the keypad type, LT indicates the user telephone line and 20 indicates the add-on device according to the present invention.

As is clearly illustrated in the figure, the device 20 is inserted on the line between the telephone 10 and the related connecting box or plug 21 and is also connected to the mains power supply, for example by means of a plug 22.

The device 20 is externally provided with a first opening 23 for inserting a pre-payment card 24, for example of the magnetic-strip type, a second opening 25 for returning the card, a numeric display 26 and with a key switch 27 used to enable or disable the device.

The device 20 internally comprises a card reader, indicated as a whole at 28 and subject to the control of a microprocessor $\mu$P; a power supply 29 with buffer source 30 adapted to supply an uninterrupted voltage stabilized at 12V; line engagement detection means, for example constituted by an opto-insulator 31 inserted on a wire of the line LT; means 32 for detecting the rate pulses at 12 or 16 kHz (co-operating with a filter $32'$); and a disconnection element, for example constituted by a relay 33.

A first and a second read heads 34, 35, an obliterating device 36 for example of the mechanical type, a sensor for detecting the presence of the card 37 and a roller 38 for advancing the card are schematically illustrated inside the reader 28.

The first head reads the field $C_1$ of the card on which the credit is recorded in the form of obliterable pulses, while the second head records and/or reads a card identification code in an appropriate field $C_2$.

The following pins and their functions are indicated in the microprocessor $\mu$P:

$U_0$: power supply input;

$U_1$: line engagement detector 31 signal input;

$U_2$: card detector 37 signal input;

$U_3$: first head 34 signal input;

$U_4$: second head 35 signal input-output;

$U_5$: output of control pulses for the obliterating device 36,

$U_6$: time-controlled output for controlling the disconnection relay 33,

$U_7$-$U_8$: outputs of enable signals for operating the disconnection relay 33,

$U_9$: card advancement control output,

$U_{10}$: rate pulse detector 32 signal input.

When the receiver is lifted, the detector 31 activates the microprocessor $\mu$P which is programmed to perform the following operating steps:

- Initially the presence of the card in the reader 28 is checked. If there is no signal from the detector 37, after a preset delay the microprocessor emits a signal on the pin $U_6$ which energizes the disconnection relay 33 and opens the line LT. If a card is present, the microprocessor enables the heads 34 and 35. The first head checks that there is enough credit in the form of pulses recorded in the field $C_1$, and the second head checks the card code recorded in the field $C_2$. If the card is virgin, the head 35 records the identification code in the

field $C_2$; said code enables the card for the telephone being used or for a series of telephones sharing the same identification code, for example all the telephones installed in a hotel, a meeting-place, a store or the like.

Checking of the fields $C_1$-$C_2$ of the card disables or enables the outputs $U_7$-$U_8$ which are connected to the disconnection relay 33 through the gate P. The outputs $U_7$-$U_8$ are correlated so that if the credit is insufficient and/or the identification code is different or incorrect the gate P energizes the relay 33 and opens the line LT.

In particular, if the credit is insufficient, the gate disconnects the line as soon as it receives from the detector 32 a rate pulse which is not covered by credit.

On the other hand, if checking of the fields $C_1$-$C_2$ is positive, the telephone 10 is enabled for the call.

During the call, the rate pulses arriving from the detector 32 energize the obliteration device 36, which correspondingly decreases the credit. This decrease is shown numerically on the display 26.

Once the credit is finished, or when the receiver is hung up, the microprocessor activates the output $U_9$ to energize the roller 38 which expels the card from the card return opening 25. This activation can also occur during the call, when the card inserted initially finishes its credit and a second card is already ready in the insertion opening. In this manner the call can continue by using the credit available on the second card.

From the above description it is evident that the installation of the add-on device according to the present invention requires no modification of the telephone 10 or of the line and that said device can be easily enabled or disabled by simply actuating the key switch 27.

Naturally the details of execution and the embodiments may vary extensively with respect to what is described and illustrated by way of non-limitative example without changing the concept of the invention and without thereby abandoning the scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A device for converting private-user telephones into pre-payment telephones enabled by using obliterable pre-payment cards (24), characterized in that it is insertable between the telephone set (10) and the telephone line (LT) and comprises a pre-payment card reader (28) controlled by a control microprocessor ($\mu$P), a power supply (29) with a buffer source (30), line engagement detection means (31) for activating the control microprocessor, rate pulse detection means (32) which activate, by means of the microprocessor, corresponding card obliteration elements (36), and time-controlled disconnection means (33) for connecting and disconnecting the telephone line, said disconnection means being responsive to the presence, in the reader, of a card (24) having preset validity requirements.

2. A device according to claim 1, characterized in that the card reader (28) comprises a first and a second head (34, 35) for reading a first field ($C_1$) of the card containing the credit in terms of obliterable pulses and, respectively, a second field ($C_2$) of the card containing an identification code for the telephone or for a series of telephones having the same identification code; the validity criterion of the card being defined by the presence of sufficient credit and by the matching of the identification code.

3. A device according to claim 1 or 2, wherein the microprocessor ($\mu$P) is programmed to control the line disconnection means (33) so that the latter allows connection of the line in the presence of a card (24) having the requested validity requirements and allows disconnection of the line in the absence of the card or in the presence of a card not having said validity requirements or when credit expires.

4. A device according to the preceding claims, wherein the microprocessor ($\mu$P) activates the obliteration elements (36) for a time corresponding to the sum of the rate pulses sent to the microprocessor by the corresponding pulse detector (32) during the call.

5. A device according to claim 1, wherein said line disconnection means (33) are energized by a first output ($U_6$) or by at least one second output ($U_7$, $U_8$) of the microprocessor ($\mu$P) and the first output ($U_6$) is activated by a card presence sensor (37) and the second output ($U_7$, $U_8$) is activated when the microprocessor receives the validity criteria of the card in terms of sufficient credit available and of identification code match.

6. A device according to claim 1, characterized in that the rate pulse detection means (32) are tuned to the frequency of 12 or 16 KHz.

7. A device according to claim 1, wherein the disconnection means (32) for connecting and disconnecting the line comprises a relay.

8. A device according to claim 1, characterized in that the line engagement detection means (31) comprises an opto-insulator inserted on a wire of the line (LT).

9. Device according to claim 1 and any one of claims 2 to 8, characterized in that it comprises a key switch (27) to insert said device on, or exclude it from, said telephone line (LT).

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 173 813 (ROBERT BOSCH)<br>* Abstract; claim 1; figure *<br>--- | 1,2 | G 07 F 7/00<br>G 07 F 7/02 |
| Y | US-A-4 731 575 (SLOAN)<br>* Abstract; column 2, lines 15-33;<br>column 4, lines 47,51; column 6, lines<br>39-62; figure 1 * | 1,2 | |
| A | | 3 | |
| A | CH-A- 622 636 (SODECO-SAIA)<br>* Abstract *<br>--- | 4 | |
| A | FR-A-1 182 420 (SODECO)<br>* Title *<br>----- | 5 | |

TECHNICAL FIELDS
SEARCHED (Int. Cl.5)

G 07 F

The present search report has been drawn up for all claims

| Place of search | Date of completion of the search | Examiner |
|---|---|---|
| THE HAGUE | 19-09-1989 | TACCOEN J-F.P.L. |